(19) Europäisches Patentamt

European Patent Office

Office européen des brevets

(11) Numéro de publication : **0 038 877**

**B1**

(12) **FASCICULE DE BREVET EUROPÉEN**

(45) Date de publication du fascicule du brevet :
26.06.85

(21) Numéro de dépôt : **80200392.1**

(22) Date de dépôt : **28.04.80**

(51) Int. Cl.⁴ : **H 02 J 13/00, H 04 B 3/54**

(54) Procédé et installation pour la transmission d'informations et de commandes sur un réseau de distribution d'énergie électrique alternative.

(43) Date de publication de la demande :
04.11.81 Bulletin 81/44

(45) Mention de la délivrance du brevet :
26.06.85 Bulletin 85/26

(84) Etats contractants désignés :
AT BE CH IT LI LU NL SE

(56) Documents cités :
DE-A- 2 835 549
FR-A- 830 555
FR-A- 2 441 300
GB-A- 234 828
GB-A- 1 461 912
US-A- 4 024 528

(73) Titulaire : **Rouet, Paul**
**2 et 4 Avenue Meurée**
**B-6001 Marcinelle (BE)**

(72) Inventeur : **Rouet, Paul**
**2 et 4 Avenue Meurée**
**B-6001 Marcinelle (BE)**

(74) Mandataire : **Bossard, Franz et al**
**ACEC - Service des Brevets Boîte Postale 4**
**B-6000 Charleroi (BE)**

## Description

La présente invention concerne un procédé pour la transmission d'informations et de commandes sur un réseau de distribution d'énergie électrique alternative selon le préambule de la revendication 1.

Elle concerne également une installation pour l'exécution dudit procédé.

Il existe des réseaux de distribution alternative dans lesquels, dans un but de commander la puissance d'un appareil consommateur d'énergie électrique, au moins un poste de commande relié au réseau interrompt au moins une partie de certaines demi-ondes du courant alternatif transmis au moyen de conducteurs à l'appareil consommateur. La coupure du courant pendant une partie d'une demi-onde peut affecter les deux demi-ondes de chaque période ou seulement une de ces demi-ondes et elle peut être réalisée soit de manière permanente ou être limitée à certaines périodes déterminées.

La durée de la coupure est en général variable en fonction d'une consigne entre quelques degrés électriques jusqu'à 180° électriques, c'est-à-dire la coupure complète d'une demi-onde.

Un procédé de transmission d'informations décrit dans la demande de brevet allemand DE-A-2835549 consiste à utiliser des suites de coupures de demi-ondes complètes comme éléments d'information détectés dans des récepteurs en aval d'un poste de commande produisant les coupures des demi-ondes. Selon ce procédé connu, il est possible seulement d'émettre des informations à partir du poste de commande vers des récepteurs dans des postes dépendants ; il s'agit donc d'un système à sens de transmission unique.

La présente invention se rattache à cet état de la technique et a pour but d'en faire usage pour un procédé de transmission d'information sans perturbation du réseau et sans nécessité, comme dans les systèmes à courant porteur, de selfs d'autant plus encombrantes et coûteuses que la puissance du réseau à alimenter est importante.

Un autre but de l'invention est de créer, sur les conducteurs du réseau électrique existant, un chemin pour des informations ou commandes dans les deux sens à partir d'un point déterminé de ce réseau de distribution vers un ou plusieurs autres points en aval ou amont, mais non au-delà de l'endroit du poste de commande ou poste maître. Il faut, en effet, éviter que ces informations ou commandes franchissent en remontant vers la source d'énergie le point défini par l'endroit du poste maître.

L'invention est caractérisée en ce que les interruptions de courant pendant au moins une partie de certaines demi-ondes sont engendrées pour le temps d'émission d'informations ou de commandes sous forme d'impulsions brèves et/ou de signaux électriques à haute fréquence, en ce qu'on envoie ces informations sur les conducteurs entre poste maître et un ou plusieurs postes dépendants et en ce qu'on les détecte dans des récepteurs à l'endroit du poste maître ou au moins un des postes dépendants.

L'information recueillie à l'endroit d'un récepteur est transformée en signal de commande pour un appareil local, par exemple un contacteur ou un appareil d'affichage à l'endroit de ce récepteur.

L'invention est applicable pour la commande de relais, contacteurs ou disjoncteurs ou d'appareils de commande de vitesse variable, etc., intervenant dans la commande de moteurs, d'appareils de chauffage, de circuits d'éclairage ou seulement de lampes, etc., dans des réseaux dans lesquels, à l'origine, on n'a pas prévu la pose de conducteurs de signalisation ou de commande, mais seulement des câbles d'alimentation de puissance. L'invention est applicable aussi à la transmission de mesures ou états de fonctionnement tels que position ouverte ou fermée de vannes ou contacteurs ou vitesse de moteurs ou température d'enroulements, débits d'eau de refroidissement, etc.

L'invention sera décrite ci-dessous à l'aide de deux exemples de formes d'exécution en se référant au dessin annexé.

Les figures 1 à 3 de ce dessin sont des diagrammes de formes d'onde ;

les figures 4 et 5 représentent des schémas électriques.

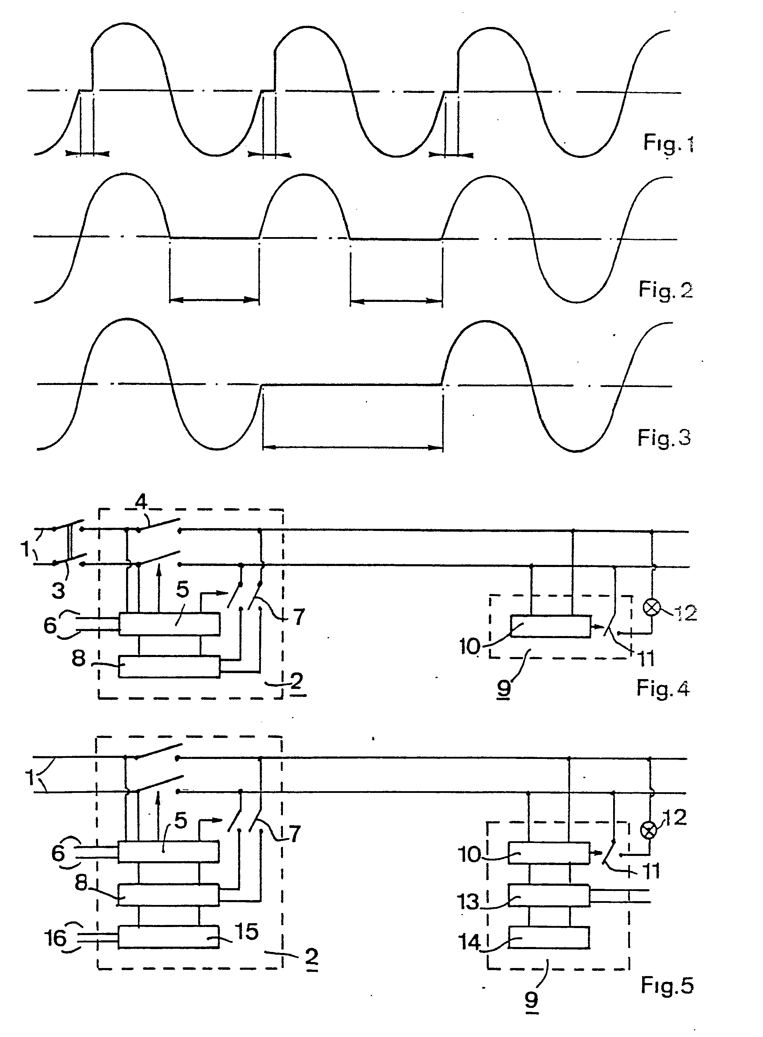

A la figure 4, un réseau d'éclairage public 1 préalablement câblé, sans prévision de commandes multiples est commandé par un poste maître 2 placé en aval d'un disjoncteur général 3. Le poste maître comprend un interrupteur 4 qui en général est un interrupteur électronique commandé par un comparateur 5. Ce comparateur 5 au poste maître 2 permet de déterminer le moment électrique le plus opportun pour effectuer la commande de l'interrupteur 4. Il peut être commandé par l'envoi d'un signal approprié sur des conducteurs 6 par intermédiaire d'une commande non représentée, manuelle, semi-automatique ou automatique, par exemple à partir d'une horloge, à partir d'un ordinateur ou à partir de tout autre élément physique approprié. Il retarde la commande arrivant sur les conducteurs 6 jusqu'au moment propice en fonction de l'amplitude croissante ou décroissante de l'onde de courant traversant l'interrupteur 4.

Les interruptions effectuées par l'interrupteur 4 en fonction du réglage du comparateur 5 peuvent se présenter sous des formes diverses : soit pendant un court instant à chaque période pendant le temps de transmission d'information comme le montre le diagramme de la figure 1, soit pendant une ou plusieurs demi-périodes comme le montre le diagramme de la figure 2, soit pendant une période entière comme le montre le diagramme de la figure 3. Si le comparateur 5 est commandé à partir d'un système suffisamment complexe, par exemple un ordinateur, son réglage peut être variable par asservissement en fonction de paramètres fixes ou variables.

Pendant la durée des interruptions commandées par l'interrupteur 4, un interrupteur 7 peut être fermé pour permettre l'envoi d'informations électriques engendrées dans un générateur 8. Le générateur 8 peut par exemple être un sélecteur (se confondant avec l'interrupteur 7) pour une fréquence déterminée parmi un échantillon de plusieurs fréquences.

Si le réseau à commander est un réseau d'éclairage, un poste dépendant 9 est placé sur chaque candélabre dont on désire commander l'allumage et l'extinction de lampes ou l'allumage à puissance réduite. Chaque poste dépendant 9 comprend un récepteur 10 sensible aux temps d'interruption de courant et à certains des signaux d'information émis par le générateur 8 et actionnant, par exemple, un interrupteur 11 pour une lampe ou un ensemble de lampes 12.

Il est ainsi possible, par exemple, d'éteindre les lampes d'un candélabre sur deux aux heures creuses ou la moitié des lampes de chaque candélabre en envoyant les fréquences prédéterminées via l'interrupteur 7.

A la figure 5, un exemple d'application est montré où l'information peut circuler dans les deux sens, sans toutefois franchir vers l'amont l'endroit du poste maître 2. Cet exemple diffère de celui de la figure 4 par le fait que au moins un des postes dépendants 9 comprend en outre un capteur de mesure ou détecteur 13 et un émetteur d'information 14 dont les signaux peuvent être envoyés vers le poste maître 2, par exemple pendant la réception d'un signal d'autorisation par le récepteur 10. Le poste maître 2 comprend à son tour un récepteur 15, relié par des conducteurs 16 à un appareil d'affichage non représenté. Une application utile de ce circuit est réalisable lorsque chaque lampe 12 est doublée d'une lampe de secours qui s'allume automatiquement lorsque la lampe 12 tombe en panne. Le capteur 13 détecte alors l'allumage de la lampe de secours et signale ce fait sur un tableau d'affichage approprié à l'endroit du poste maître.

Il est évidemment possible aussi de transmettre des informations entre deux postes dépendants 9 à condition de les équiper d'émetteurs et récepteurs appropriés.

Une application avantageuse de l'invention consiste en la gestion des moments d'enclenchement de consommateurs électriques à pointe d'enclenchement importante. Cette gestion peut être réalisée par exemple par un ordinateur programmé en fonction du résultat désiré. L'ordinateur est relié aux postes maîtres alimentés par un même compteur électrique et reçoit de la part des postes dépendants l'information du désir d'enclencher les diverses machines, mais chaque machine ne pourra se mettre en route que sur ordre de l'ordinateur transmis comme décrit ci-dessus. Il est possible de réduire ainsi les pointes de consommation qui sont lourdement taxées selon le système du « quart horaire » et qui perturbent les réseaux d'alimentation.

## Revendications

1. Procédé pour la transmission d'informations et de commandes sur un réseau de distribution (1) d'énergie électrique alternative équipé d'au moins un poste de commande ou poste maître (2) relié au réseau qui interrompt au moins une partie de certaines demi-ondes du courant alternatif transmis à un ou plusieurs postes dépendants (9) équipés de récepteurs (10), associés à des appareils consommateurs, caractérisé en ce que les interruptions de courant pendant au moins une partie de certaines demi-ondes sont engendrées pour le temps d'émission d'informations ou de commandes sous forme d'impulsions brèves et/ou de signaux électriques à haute fréquence, en ce qu'on envoie ces informations sur les conducteurs entre poste maître (2) et un ou plusieurs postes dépendants (9) et en ce qu'on les détecte dans des récepteurs (10, 15) à l'endroit du poste maître (2) ou au moins un des postes dépendants (9).

2. Procédé suivant la revendication 1, caractérisé en ce que l'information recueillie à l'endroit d'un récepteur (10, 15) est transformée en signal de commande pour un appareil consommateur local (12) ou un dispositif d'affichage.

3. Installation pour l'exécution du procédé suivant une des revendications 1 ou 2, caractérisée en ce que le poste maître (2) comprend un interrupteur (4) disposé entre le réseau (1) et les conducteurs reliés aux postes dépendants (9), et un comparateur (5) commandant l'interrupteur (4), en ce qu'au moins un parmi le poste maître (2) et les postes dépendants (9) comprend un émetteur ou générateur (8, 14) de signaux d'information et en ce qu'au moins un parmi le poste maître et les postes dépendants (9) comprend un récepteur (10, 15) sensible aux temps d'interruption de courant et à certains des signaux d'information émis par ledit générateur (8, 14).

4. Installation suivant la revendication 3, caractérisée en ce qu'au moins un générateur (8) de signaux d'information est commandé par un dispositif de gestion semi-automatique ou automatique.

5. Installation suivant une des revendications 3 ou 4, caractérisée en ce qu'au moins dans un des postes dépendants (9) est disposé un émetteur (14) de signaux d'information commandé par un capteur (13) de mesure ou détecteur d'état de fonctionnement.

6. Installation suivant une des revendications 3, 4 ou 5, caractérisée en ce qu'au moins un des récepteurs (10) commande un contacteur d'un appareil consommateur local (11).

## Claims

1. Process for transmitting information and instructions on an alternating current distribution network (1) equipped with at least one instruction or master station (2) connected to the network which interrupts at least a portion of certain half-waves of the alternating current transmitted to one or more dependent stations (9) equipped with receivers (10) associated with consumer apparatus, characterised in that the current interruptions during at least a portion of certain half-waves are produced for the time of transmitting information and instructions in the form of high-frequency electrical signals and/or short pulses, in that the said information is sent along the conductors between the master station (2) and one or more dependent stations (9), and in that it is detected in receivers (10, 15) situated at the master station (2) or at least one of the dependent stations (9).

2. Process according to claim 1, characterised in that the information received at a receiver (10, 15) is converted into a control signal for a local consumer apparatus (12) or a display device.

3. System for using the process according to one of claims 1 or 2, characterised in that the master station (2) comprises a switch (4) arranged between the network (1) and the conductors connected to the dependent stations (9), and a comparator (5) controlling the switch (4), in that at least one of the master station (2) and the dependent stations (9) comprises a transmitter or generator (8, 14) of information signals, and in that at least one of the master station and the dependent stations (9) comprises a receiver (10, 15) sensitive to the current interruption times and to certain of the information signals emitted by the said generator (8, 14).

4. System according to claim 3, characterised in that at least one generator (8) of information signals is controlled by an automatic or semiautomatic control unit.

5. System according to one of claims 3 or 4, characterised in that at least in one of the dependent stations (9) there is arranged a transmitter (14) of information signals which is controlled by a measurement pickup (13) or operating state detector.

6. System according to one of claims 3, 4 or 5, characterised in that at least one of the receivers (10) controls a switch of a local consumer apparatus (11).

**Patentansprüche**

1. Verfahren zur Übertragung von Nachrichten- und Steuersignalen auf einem Wechselstrom-Versorgungsnetz (1), das mit mindestens einer, mit dem Netz verbundenen Steuerstation oder Hauptstation (2) ausgerüstet ist, die während mindestens eines Teils der Halbwellen bestimmte Halbwellen des Wechselstroms unterbricht, der an eine oder mehrere, abhängige Stationen (9) weitergeleitet wird, die mit Empfängern (10) ausgerüstet sind, die mit elektrischen Verbrauchern (10) kombiniert sind, dadurch gekennzeichnet, daß die Stromunterbrechungen während mindestens eines Teils bestimmter Halbwellen für die Zeit der Aussendung von Nachrichten- oder Steuersignalen in Form von kurzen Impulsen und/oder Hochfrequenzsignalen erzeugt werden, daß diese Nachrichtensignale zwischen der Hauptstation (2) und einer oder mehreren abhängigen stationen (9) auf die Leiter gegeben werden, und daß sie in Empfängern (10, 15) an der Stelle der Hauptstation (2), oder von mindestens einer der abhängigen Stationen (9) nachgewiesen werden.

2. Verfahren gemäß Anspruch 1, dadurch gekennzeichnet, daß das an der Stelle eines Empfängers (10, 15) erhaltene Nachrichtensignal in ein Steuersignal für einen örtlichen elektrischen Verbraucher (12) oder eine Anzeigevorrichtung umgewandelt wird.

3. Anlage zur Verwirklichung des Verfahrens gemäß einem der Ansprüche 1 oder 2, dadurch gekennzeichnet, daß die Hauptstation (2) einen Schalter (4) aufweist, der zwischen dem Netz (1) und den mit den abhängigen Stationen (9) verbundenen Leitern angeordnet ist, und außerdem einen Komparator (5) aufweist, der den Schalter (4) steuert, daß bei der Hauptstation (2) oder den abhängigen Stationen (9) mindestens eine Station einen Sender oder Generator (8, 14) für Nachrichtensignale aufweist, und daß bei der Hauptstation (2) oder den abhängigen Stationen (9) mindestens eine Station einen Empfänger (10, 15) aufweist, der empfindlich ist gegenüber den Stromunterbrechungszeiten und gegenüber bestimmten, von dem besagten Generator (8, 14) ausgesendeten Nachrichtensignalen.

4. Anlage gemäß Anspruch 3, dadurch gekennzeichnet, daß mindestens ein Generator (8) für Nachrichtensignale durch eine halbautomatische oder automatische Steuervorrichtung gesteuert wird.

5. Anlage gemäß einem der Ansprüche 3 oder 4, dadurch gekennzeichnet, daß in mindestens einer der abhängigen Stationen (9) ein Sender (14) für Nachrichtensignale angeordnet ist, der durch einen Meßwertaufnehmer (13) oder Betriebzustandsfühler gesteuert wird.

6. Anlage gemäß einem der Ansprüche 3, 4 oder 5, dadurch gekennzeichnet, daß mindestens einer der Empfänger (10) ein Schütz eines örtlichen elektrischen Verbrauchers (11) steuert.

Fig. 1

Fig. 2

Fig.3

Fig. 4

Fig.5